# FASCICULE DE BREVET EUROPEEN

(11) **EP 2 599 410 B1**
(45) Date de publication et mention de la délivrance du brevet: **09.03.2016**
(21) Numéro de dépôt: 12306496.6
(22) Date de dépôt: 30.11.2012
(51) Int. Cl.: A47G 25/08, A47G 25/10, A47G 25/06

(54) **Organe pour la suspension d'objets**
Organ zum Aufhängen von Gegenständen
Member for hanging objects

(30) Priorité: 02.12.2011 FR 1161076
(43) Date de publication de la demande: 05.06.2013
(73) Titulaire: Polymoule, 72550 Coulans sur Gee (FR)
(72) Inventeur: Cosnet, Gilbert, 72550 Degré (FR)
(74) Mandataire: Coralis Harle

(56) Documents cités:
- CH-A- 107 374
- US-A- 3 536 286
- US-A- 4 372 450
- US-A- 6 112 909
- US-A1- 2010 219 307

## Description

La présente invention concerne le domaine du stockage et du rangement ; l'invention concerne en particulier un organe de rangement/stockage par suspension.

Certains objets sont particulièrement adaptés à un rangement et à un stockage de manière suspendue sur un dispositif dédié.

C'est par exemple le cas des équipements du cheval (notamment selles, couvertures, brides, bombes, licols), des accessoires de pêche (par exemple cannes à pêche, bottes) ou de certains outils (par exemple pelles, râteaux), voire de vêtements.

Certains dispositifs pour la suspension d'objets, encore couramment dénommés « patères », comprennent classiquement une embase support qui est destinée à être fixée sur une structure de réception (par exemple un mur, une porte, un mobilier dédié) et qui comporte au moins un organe pour la suspension de ces objets (Voir notamment les dispositifs de suspension décrits dans les documents CH-107 374, US-4 372 450, US-3 536 286, US-6 112 909 ou encore US-2010/219307).

Mais la plupart des dispositifs de suspension actuels sont particulièrement basiques et ils ne permettent la réception optimale que d'un seul type d'objet, leur polyvalence étant ainsi relativement limitée.

En outre, la configuration de ces dispositifs est très souvent figée et il n'est pas possible de la faire évoluer, notamment pour tenir compte des besoins spécifiques de chaque utilisateur, que ce soit en matière d'équipement à suspendre, de structure support en présence ou encore de goût esthétique.

Dans ce contexte, la demanderesse a développé un nouvel organe de suspension, utilisable éventuellement comme élément d'un dispositif de suspension, qui a l'intérêt d'être polyvalent, évolutif et particulièrement moderne.

A cet effet, le dispositif conforme à l'invention, pour la suspension d'objets, par exemple d'équipements du cheval ou d'accessoires de pêche comprend :
a/ un premier organe de suspension, en forme de crochet, muni d'une partie d'assemblage, et
b/ un second organe de suspension comprenant une platine dont - une face arrière est destinée à être orientée du côté d'une structure de réception et - une face avant est munie (i) d'une extension pour la suspension d'objets, et (ii) en dessous de ladite extension, d'un emplacement pour la réception amovible dudit premier organe de suspension, lequel emplacement comporte des moyens pour un emboitement élastique, de type clipsage ou encliquetage, de ladite partie d'assemblage dudit organe de suspension associé ; et ce dispositif de suspension est caractérisé en ce qu'il comprend encore une embase support qui est destinée à être fixée sur une structure de réception et qui comporte au moins un emplacement pour la réception amovible, par emboîtement, d'une partie assemblage dudit second organe de suspension ménagée dans ladite face arrière de sa platine, ou de ladite partie d'assemblage dudit premier organe de suspension en forme de crochet.

D'autres caractéristiques techniques avantageuses, pouvant être prises en combinaison ou indépendamment les unes des autres, sont indiquées ci-dessous :
- ladite extension dudit second organe de suspension présente une section et une surface supérieure qui sont de forme courbe convexe, apte à servir en particulier de porte-bride ou de porte-bombe.
- du côté de sa face arrière, ladite platine comporte un plan définissant une surface d'appui arrière apte à venir prendre appui sur la structure de réception ;
- le cas échéant, la partie assemblage s'étend dans le plan définissant la surface d'appui arrière ;
- la platine est munie de plusieurs orifices traversants qui sont utiles pour le positionnement d'accessoires de fixation, de sorte à permettre une solidarisation directe de cet organe de suspension sur une structure de réception ;
- son emplacement consiste en un évidement comportant une surface de fond bordée par deux bordures latérales raccordées par une bordure transversale inférieure, et ladite bordure transversale inférieure est munie d'une saignée axiale au sein de laquelle est ménagé un ergot.

L'embase support comporte encore avantageusement au moins un organe pour sa fixation sur la structure de réception, lequel organe de fixation consiste également en un organe amovible comportant une partie assemblage ; et ladite embase support comporte alors avantageusement au moins un emplacement pour la réception amovible, par emboîtement, de ladite partie assemblage dudit organe de fixation.

Cette embase support comporte encore deux faces opposées, l'une arrière, destinée à être orientée du côté de la structure de réception, et l'autre avant ; et ladite face avant comporte avantageusement au moins un emplacement pour la réception amovible d'un organe de suspension ; de son côté, le cas échéant, ladite face arrière comporte avantageusement au moins un emplacement pour la réception amovible d'un organe de fixation.

Dans ce cas, le ou les emplacements de la face avant et le ou les emplacements de la face arrière ont de préférence des structures identiques qui sont orientées en sens inverse l'une par rapport à l'autre entre lesdites faces avant et arrière.

La partie assemblage du ou des organes amovibles et le ou les emplacements de l'embase support sont avantageusement structurés pour assurer un positionnement dudit organe amovible par un mouvement en translation selon une direction parallèle au plan général de l'embase support.

Dans ce cas, le ou les emplacements de l'embase support consistent chacun avantageusement en une encoche qui est ouverte frontalement, et qui est délimitée par une surface de fond bordée par au moins deux bordures latérales pour le guidage en translation de ladite partie assemblage lors du montage de l'organe amovible associé.
Les bordures latérales de chaque emplacement de l'embase support sont de préférence raccordées par une bordure transversale ; et la partie assemblage du ou des organes amovibles comporte alors une surface d'appui complémentaire au moins de ladite bordure transversale.
Le ou les emplacements de l'embase support sont avantageusement chacun ouverts également à l'opposé de la bordure transversale ; et les bordures latérales divergent l'une par rapport à l'autre à partir de ladite bordure transversale.

Les bordures latérales et/ou la bordure transversale de chaque emplacement comportent avantageusement une rainure longitudinale ; et la surface d'appui du ou des organes rapportés est avantageusement munie d'une nervure complémentaire de ladite rainure pour obtenir le guidage et l'assemblage par emboîtement recherchés

Par ailleurs, la partie assemblage du ou des organes amovibles et le ou les emplacements complémentaires de l'embase support comportent avantageusement des moyens pour leur emboîtement élastique.

Dans ce cas, la bordure transversale de l'emplacement est avantageusement munie d'une saignée au sein de laquelle est ménagé un ergot ; et la partie assemblage de l'organe amovible comporte avantageusement une languette complémentaire de ladite saignée et munie d'une réservation complémentaire dudit ergot.

L'embase support comporte un axe longitudinal ; et les emplacements pour la réception des organes de suspension sont alors avantageusement répartis le long de cet axe longitudinal.
Dans ce cas, les emplacements pour la réception des organes de suspension comportent de préférence chacun un axe de symétrie qui est orienté perpendiculairement audit axe longitudinal.

Le premier organe de suspension comporte avantageusement un crochet avec une face d'appui concave pour constituer l'organe de suspension ou l'organe de fixation, cela en fonction de l'orientation vers le haut ou vers le bas de ladite face d'appui déterminée par son emplacement de réception.

L'invention sera encore illustrée, sans être aucunement limitée, par la description suivante d'un mode de réalisation particulier, en relation avec les dessins annexés dans lesquels :
- la figure 1 est une vue générale, et en perspective, d'un dispositif de suspension selon l'invention ;
- la figure 2 est une vue de face du dispositif de suspension selon la figure 1 ;
- la figure 3 est une vue en coupe transversale selon le plan transversal III-III de la figure 2 qui passe par un organe de suspension en forme de crochet ;
- la figure 4 est une vue en coupe transversale selon le plan IV-IV de la figure 2, passant par deux organes de suspension associés (l'un en forme de crochet et l'autre formant porte-bride) et par un organe de fixation en forme de crochet ;
- la figure 5 est une vue générale de l'embase support constitutive du dispositif de suspension selon les figures 1 ou 2, avec une perspective orientée du côté de sa face avant ;
- la figure 6 montre également l'embase support du dispositif de suspension, ici selon une perspective orientée du côté de sa face arrière ;
- la figure 7 est une vue de face de l'embase support des figures 5 et 6 ;
- la figure 8 est une vue générale et en perspective de l'un des organes amovibles en forme de crochet, apte à constituer un organe de suspension ou un organe de fixation selon son orientation ;
- la figure 9 est également une représentation en perspective de l'organe amovible en forme de crochet, ici orientée du côté de sa partie assemblage ;
- la figure 10 est une vue de côté de l'organe amovible en forme de crochet selon les figures 8 ou 9 ;
- les figures 11 et 12 représentent l'organe amovible formant porte-bride, selon des perspectives orientées respectivement du côté de sa face avant et de sa face arrière ;
- la figure 13 est une vue de face de l'organe porte-bride selon les figures 11 et 12 ;
- la figure 14 est une vue en coupe transversale, selon le plan XIV-XIV, de l'organe porte-bride de la figure 13 ;
- la figure 15 constitue également une vue en coupe de l'organe amovible porte-bride selon les figures 11 à 14, sur lequel est ici rapporté un organe amovible de suspension en forme de crochet.

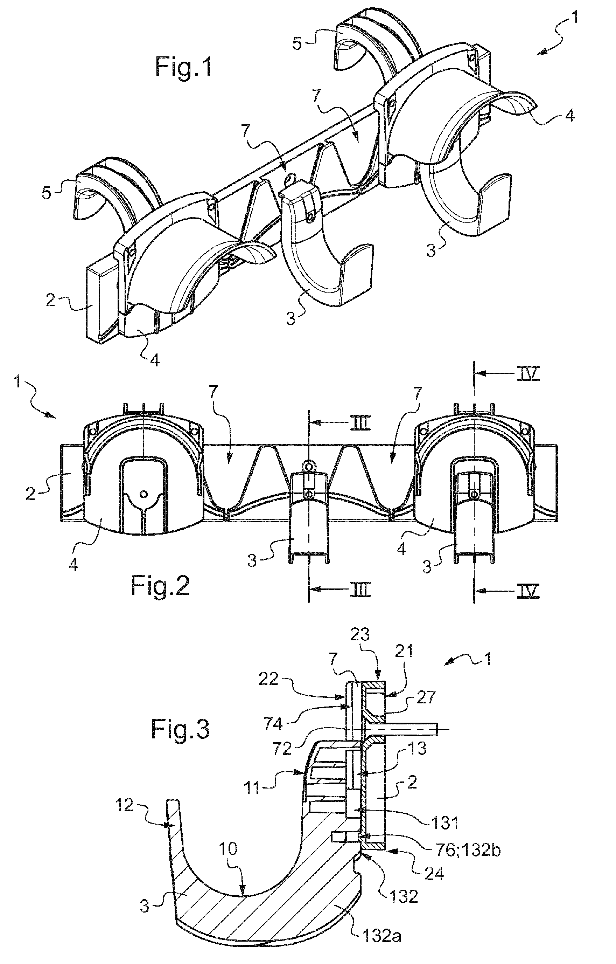

Le dispositif de rangement/stockage 1, tel que représenté sur les figures 1 et 2, est adapté pour recevoir une pluralité d'objets par suspension.

Le dispositif de suspension 1 correspondant est adapté en particulier pour suspendre des équipements du cheval, c'est-à-dire notamment les brides, les selles, les licols, les bombes ou les couvertures.

Ce dispositif de suspension 1 pourrait également servir au support d'autres objets, par exemple des accessoires de pêche (notamment des cannes à pêche, des bottes, des rames) ou des outils (pelles, râteaux, etc.).

Pour cela, le dispositif de suspension 1 comprend une embase support 2 qui est équipée ici de deux types d'organes pour la suspension d'objets, à savoir :
- des premiers organes de suspension 3 en forme de crochets, adaptés par exemple pour la réception de licols ou de couvertures, et
- des seconds organes de suspension 4, qui sont aptes à servir en particulier de porte-bride ou de porte-bombe (désignés ci-après « porte-bride » par souci de simplification).

Cette embase support 2 est encore ici équipée d'organes de fixation 5, pour sa solidarisation sur une structure de réception (non représentée), par exemple une traverse, une porte, une grille, un panneau ou une barrière.

Ces différents organes de suspension 3, 4 et organes de fixation 5 consistent en des pièces qui sont rapportées de manière amovible et interchangeable chacune sur un emplacement ménagé dans l'embase support 2. Cette structure permet ainsi d'adapter, à façon, le dispositif de suspension 1 en fonction des objets à stocker/ranger.

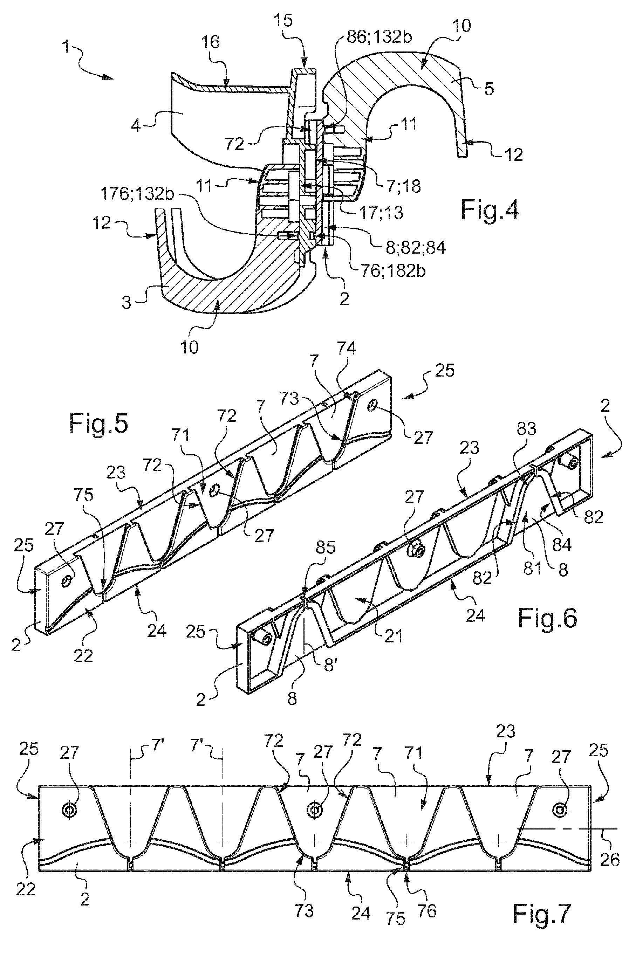

La structure de l'embase support 2 est décrite plus en détails ci-dessous en relation avec les figures 5 à 7.

Cette embase support 2 consiste en une pièce monobloc, en forme générale de réglette parallélépipédique plane. Elle est avantageusement fabriquée en un matériau polymère thermoplastique (par exemple en polypropylène, en polyéthylène ou en acrylonitrile-butadiène-styrène « ABS ») par exemple par une technique de moulage par injection.

Cette embase support 2 comporte deux faces opposées :
- une face arrière 21, destinée à être orientée du côté de la structure de réception (non représentée) et formant avantageusement un plan d'appui sur cette structure de réception, et
- une face avant 22 opposée.

L'embase support 2 est encore délimitée par deux bordures longitudinales, l'une supérieure 23 et l'autre inférieure 24, reliées par deux bordures latérales 25.

Cette embase support 2 comporte encore un axe longitudinal 26 (figure 7), s'étendant parallèlement aux faces opposées 21, 22 et à ses bordures longitudinales 23, 24.

Pour la réception des organes amovibles 3, 4 et 5 précités, cette embase support 2 est munie d'un ensemble d'emplacements adaptés :
- sa face avant 22 est munie d'emplacements avant 7 (figures 5 et 7), pour la réception des organes amovibles 3, 4 pour la suspension d'objets, et
- sa face arrière 21 comporte des emplacements arrière 8 (figure 6), pour la réception amovible des organes amovibles 5 pour la fixation sur la structure de réception.

Sur la face avant 22, les emplacements 7 sont répartis le long de l'axe longitudinal 26 de l'embase support 2.
Les emplacements avant 7 sont ici au nombre de cinq ; de préférence, l'embase support 2 comporte au moins un emplacement avant 7, encore avantageusement au moins deux emplacements avant 7, par exemple entre deux et vingt emplacements avant 7 (de préférence entre 5 et 15). Les emplacements arrière 8 sont ici au nombre de deux, ménagés chacun du côté et à proximité de l'une des bordures latérales 25 de l'embase support 2 (figure 6).

Dans le présent mode de réalisation, les différents emplacements 7 et 8 de l'embase support 2 sont tous identiques entre eux.

Les emplacements 7 et 8 de l'embase support 2 consistent ici chacun en une encoche qui est ouverte frontalement (vers l'avant et au travers de la face avant 22 pour les emplacements avant 7, ou vers l'arrière et au travers de la face arrière 21 pour les emplacements arrière 8).

Ces emplacements 7 et 8 sont chacun délimités par une surface de fond 71, 81 bordée par deux bordures latérales 72, 82 raccordées par une bordure transversale 73, 83 ; ils sont ouverts également en regard de ladite bordure transversale 73, 83.

Les bordures latérales 72, 82 des emplacements 7, 8 sont ici rectilignes. Les bordures transversales 73, 83 ont ici quant à elles une forme courbe concave (par exemple une forme de demi-cercle).

Au niveau de chaque emplacement 7, 8, leurs bordures 72, 73 et 82, 83 définissent, respectivement, une forme générale de V avec un axe de symétrie 7', 8' (figures 6 et 7).

Chacun des axes de symétrie 7', 8' est ici orienté perpendiculairement à l'axe longitudinal 26 de l'embase support 2.

Les bordures latérales 72, 82 de chaque emplacement 7, 8 divergent ainsi l'une par rapport à l'autre, à partir de la bordure transversale 73, 83 associée.

Plus précisément, les emplacements 7 de la face avant 22 et les emplacements 8 de la face arrière 21 ont des structures identiques, mais sont orientés en sens inverse l'un par rapport à l'autre entre lesdites faces avant 22 et arrière 21.

Ainsi, en l'occurrence, la bordure transversale 73 des emplacements avant 7 est ménagée du côté de la bordure longitudinale inférieure 24 de l'embase 2. Leurs bordures latérales 72 divergent l'une par rapport à l'autre en direction de la bordure supérieure 23 de l'embase 2. Ces emplacements avant 7 sont de plus ouverts au niveau de cette bordure longitudinale supérieure 23 de l'embase 2.

Inversement, les emplacements arrière 8 ont quant à eux une bordure transversale 83 située du côté de la bordure longitudinale supérieure 23 de l'embase 2. Leurs bordures latérales 82 divergent l'une par rapport à l'autre en direction de la bordure inférieure 24 de l'embase 2. Ces emplacements 8 sont de plus ouverts à l'opposé de ladite bordure transversale 83, du côté de la bordure inférieure 24 de l'embase 2.

Pour l'assemblage par emboîtement d'un organe amovible 3, 4 ou 5, les bordures latérales 72, 82 et la bordure transversale 73, 83 de chaque emplacement 7, 8 comportent une rainure longitudinale 74, 84 ouverte au sein de l'emplacement 7, 8 (visible également figures 3 et 4).

Ces emplacements 7, 8 comportent encore des moyens complémentaires pour un emboitement élastique, de type clipsage ou encliquetage, avec l'organe amovible 3, 4 ou 5 associé (en particulier pour assurer un verrouillage amovible en translation des organes 3, 4 ou 5 rapportés).

Pour cela, la bordure transversale 73, 83 de chaque emplacement 7, 8 est munie d'une saignée 75, 85, orientée coaxialement à son axe de symétrie 7', 8'.

La saignée 75, 85 s'étend entre cette bordure transversale 73, 83 de l'emplacement 7, 8 et la bordure longitudinale juxtaposée 23 ou 24 de l'embase 2.

Un ergot 76, 86 (visible en particulier sur les figures 3 et 4) est ménagé au sein de cette saignée 75, 85, destiné à coopérer avec une forme complémentaire de l'organe amovible 3, 4 ou 5 associé.

L'embase support 2 est encore munie de plusieurs orifices traversants 27 (figures 5 à 7), convenablement répartis sur sa longueur.
Ces orifices 27 sont ici au nombre de trois, l'un ménagé au milieu de la longueur de l'embase 2 et les deux autres à proximité de l'une des bordures latérales 25 de l'embase 2.

Ces orifices 27 sont aptes à recevoir chacun un accessoire de fixation (non représenté - par exemple une vis à tête fraisée pour sa fixation dans un mur), pour une fixation directe de l'embase 2 sur une structure de réception (c'est-à-dire sans les organes de fixation 5 à l'arrière).

Les organes amovibles 3 et 5, en forme de crochets, ont ici des structures identiques, pour constituer un organe de suspension 3 ou un organe de fixation 5 en fonction de son orientation déterminée par son emplacement de réception 7 ou 8.

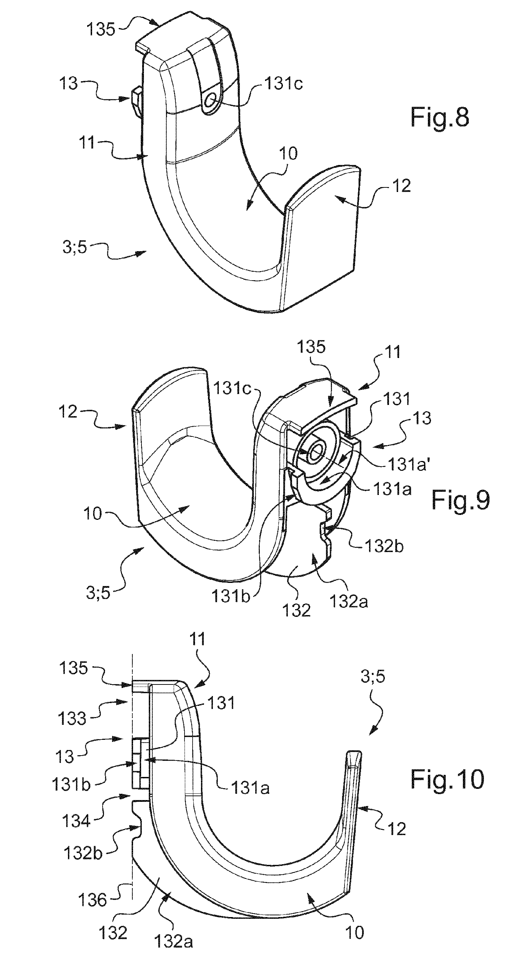

La structure de ces crochets 3, 5 est décrite plus en détails ci-dessous en relation avec les figures 8 à 10.

Sur ces figures, on peut voir que chaque organe en forme de crochet 3, 5 consiste en une pièce en forme générale de U.

Ce crochet 3, 5 est avantageusement obtenu également par moulage par injection d'une matière polymère thermoplastique, par exemple en polyéthylène, en polypropylène ou en acrylonitrile-butadiène-styrène.

Chacun de ces crochets 3, 5 comporte une portion d'appui concave 10, prolongée par deux portions en regard et à distance l'une de l'autre, l'une arrière 11 et l'autre avant 12.

La portion avant 12 est relativement aplatie pour limiter son encombrement.

La portion arrière 11 est munie d'une partie assemblage 13 qui est destinée à coopérer, par emboîtement, avec un emplacement 7, 8 de l'embase support 2.

En l'occurrence, cette partie assemblage 13 comporte un premier élément saillant 131 qui se compose d'une paroi cintrée 131a dont la bordure arrière est prolongée par une nervure 131b formant une collerette périphérique saillante.

La paroi cintrée 131a présente ici une section en forme générale de demi-cercle (avec un axe longitudinal 131a'), dont la convexité est orientée du côté de la portion courbe 10 du crochet 3, 5.

La nervure 131b s'étend approximativement du côté de la portion concave 10, et dans un plan perpendiculaire à l'axe longitudinal 131a' de la paroi cintrée 131a.

Cette paroi cintrée 131a forme une surface d'appui qui est complémentaire des bordures transversales 73, 83 des emplacements 7, 8 de l'embase support 2. La nervure 131b est quant à elle complémentaire de la rainure 74, 84 des emplacements 7, 8 pour le guidage et pour l'assemblage par emboîtement des crochets 3, 5 sur l'embase 2.

La partie assemblage 13 du crochet 3, 5 est encore munie d'un second élément saillant 132 pour coopérer par emboîtement élastique avec les ergots dédiés 76, 86 des emplacements 7 et 8.

Ce second élément saillant 132 consiste quant à lui en une languette 132a, complémentaire d'une saignée 75, 85 des emplacements 7, 8, et qui est munie d'une réservation arrière 132b complémentaire de son ergot 76, 86.

Tel que représenté sur la figure 10, les éléments saillants 131 et 132 définissent encore deux emplacements 133 et 134, qui sont utiles pour l'assemblage de deux de ces crochets 3, 5 tête-bêche.

Le premier élément saillant 131, et une patte arrière 135 en regard située à distance de la portion concave 10, définissent ensemble un premier espace 133 qui est destiné à recevoir un premier élément saillant 131 d'un crochet complémentaire 3, 5 assemblé tête-bêche.

Les deux éléments saillants 131 et 132 définissent entre eux un second espace 134 qui est destiné à recevoir la patte arrière 135 lors de l'assemblage tête-bêche avec un crochet complémentaire 3, 5.

Encore pour cet assemblage tête-bêche, le premier élément saillant 131 comporte également un orifice traversant 131c pour le positionnement d'un organe de fixation adapté (par exemple une structure du type boulon).

Sur la figure 10, on remarque encore que la bordure arrière de la patte 135, et les éléments saillants 131 et 132, définissent un plan 136 formant une surface d'appui arrière.

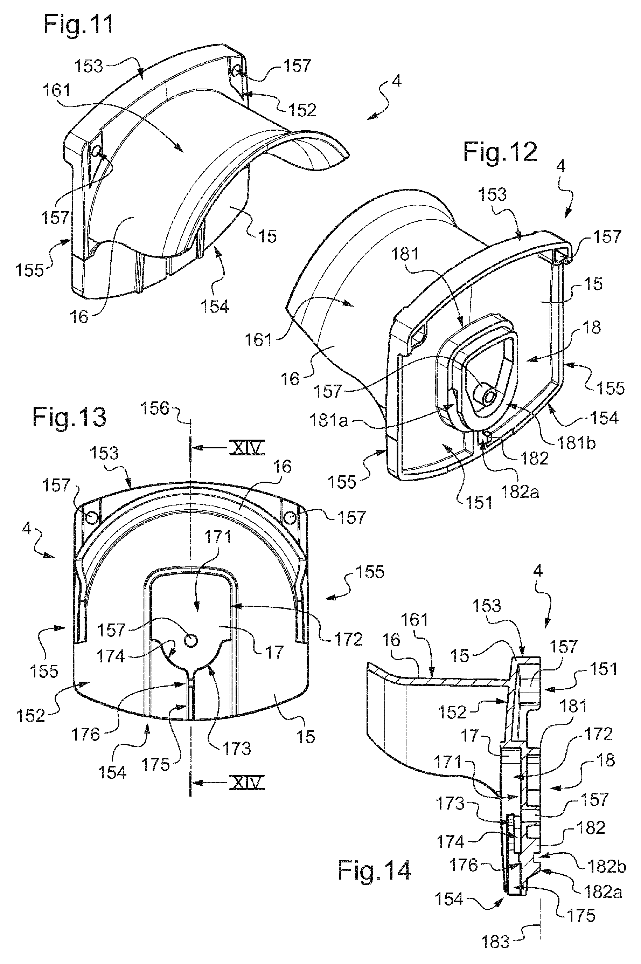

La structure de l'organe de suspension dit « porte-bride » 4 est décrite plus en détails ci-dessous en relation avec les figures 11 à 14.

Cet organe porte-bride 4 est également réalisé en matériau thermoplastique polymère (par exemple en polyéthylène, en polypropylène ou en acrylonitrile-butadiène-styrène), avantageusement par moulage par injection.

Cet organe de suspension 4 comprend une platine 15 de forme générale rectangulaire, comportant - une face arrière 151, destinée à coopérer avec l'embase support 2, et - une face avant 152 opposée.

Cette platine 15 est délimitée par un contour de forme générale rectangulaire, qui se compose d'une bordure supérieure 153, d'une bordure inférieure 154 et de deux bordures latérales 155.

Cette platine 15 comporte encore un axe vertical 156, parallèle aux bordures latérales 155 et formant un axe de symétrie de l'organe porte-bride 4.

La face avant 152 de cette platine 15 est munie d'une extension 16 à section en arc de cercle, dont la surface supérieure 161 présente une forme générale courbe convexe pour la réception par exemple d'une bride ou d'une bombe de cavalier.
La convexité de cette extension avant 16 est orientée du côté de la bordure supérieure 153 de la platine 15, et sa flèche est confondue avec l'axe de symétrie 156 précité.

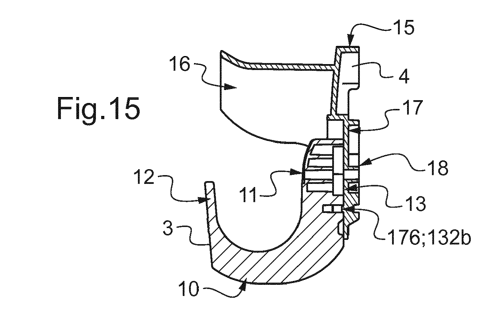

Sous cette extension avant 16, la face avant 151 est munie ici d'un emplacement 17, pour la réception de la partie assemblage 13 d'un autre organe de suspension 3, 5 tel qu'illustré notamment sur la figure 15.

Pour cela, cet emplacement 17 est identique ou similaire aux emplacements 7 et 8 équipant l'embase support 2.

En l'occurrence, cet emplacement 17 de l'organe porte-bride 4 consiste en un évidement comportant également une surface de fond 171 bordée par deux bordures latérales 172 raccordées par une bordure transversale inférieure 173.

Les bordures latérales 172 s'étendent ici parallèlement et à distance l'une de l'autre, et parallèlement aux bordures latérales 155 de la platine 15.

La bordure inférieure 173 présente quant à elle une forme générale courbe, en l'occurrence une forme générale d'arc de cercle.

Cette bordure transversale 173 est en plus munie d'une rainure longitudinale 174 (visible sur la figure 14), et d'une saignée axiale 175 au sein de laquelle est ménagé un ergot 176 (figure 14).

La saignée axiale 175 s'étend coaxialement à l'axe de symétrie 156 de cet organe porte-bride 4, cela entre la bordure transversale 173 de son emplacement 17 et la bordure inférieure 154 de la platine 15.

La face arrière 151 de cette platine 15 est quant à elle munie d'une partie assemblage 18 pour son emboîtement dans l'un des emplacements avant 7 de l'embase support 2.

La partie assemblage 18 de ce porte-bride 4 est identique ou similaire à la partie assemblage 13 décrite ci-dessus pour les crochets 3, 5.

Cette partie assemblage 18 comporte ainsi un premier élément saillant 181 comportant une surface inférieure 181a de forme générale courbe (orientée vers la bordure inférieure 154 de la platine 15) et dont la bordure arrière est prolongée par une nervure 181b.

Cette nervure 181b s'étend en direction de la bordure inférieure 154 de la platine 15, et parallèlement au plan général de sa platine 15 (parallèle aux faces arrière 151 et avant 152 de la platine 15).

Pour son assemblage au sein de l'un des emplacements avant 7 de l'embase 2, la surface d'appui 181a de cette partie assemblage 18 de l'organe porte-bride 4 est complémentaire de leur bordure transversale 73 ; sa nervure 181b est quant à elle complémentaire de la rainure 74 de ces emplacements avant 7.

La partie assemblage 18 de cet organe porte-bride 4 est ici munie encore des moyens d'emboîtement élastique 182 comprenant une languette 182a munie d'une réservation 182b, qui sont respectivement complémentaires de la saignée 75 de l'un des emplacements avant 7 et de son ergot 76.

Sur la figure 14, on remarque encore que la partie assemblage 18 de l'organe porte-bride 4 s'étend dans un plan 183 définissant une surface d'appui arrière, notamment pour sa fixation sur un mur.

La platine 15 est encore munie de plusieurs orifices traversants 157 qui sont utiles pour le positionnement d'accessoires de fixation, de sorte à permettre une solidarisation directe de cet organe porte-bride 4 sur une structure de réception (par exemple au moyen de vis à tête fraisée pour une fixation sur mur). La surface d'appui arrière 183 vient alors prendre appui directement sur la structure de réception.

Deux de ces orifices traversants 157 sont ménagés ici au niveau de l'un des angles de la platine 15, défini par la bordure supérieure 153 avec l'une des bordures latérales 155.
Un orifice 157 complémentaire est ici également ménagé au sein de son emplacement 17.

En pratique, le dispositif de suspension 1 tel qu'illustré par les figures 1 et 2 est obtenu en rapportant de manière appropriée des organes amovibles 3, 4 et 5 sur l'embase support 2.

Plus précisément, chaque organe de suspension 3 ou 4 à monter est positionné au sein d'un emplacement avant 7 de l'embase support 2 de sorte que sa surface arrière d'appui 136, 183 vienne en butée contre la surface de fond 71 de l'embase 2.
Cet organe de suspension 3, 4 est en plus orienté de sorte que son axe de symétrie soit confondu avec l'axe de symétrie 7' de l'emplacement 7 associé. En particulier, l'organe de suspension en forme de crochet 3 est orienté de sorte que sa portion concave 10 est ouverte du côté de la bordure supérieure 23 de l'embase support 2.

Ensuite, cet organe de suspension 3, 4 est manoeuvré en translation selon une direction qui s'étend dans le plan général de l'embase 2 (parallèle aux faces arrière 21 et avant 22 de l'embase support 2), et cela dans un sens orienté depuis la bordure supérieure 23 vers la bordure inférieure 24 de l'embase 2 (c'est-à-dire encore en direction de la bordure transversale 73 de l'emplacement avant 7).

Lors de cette translation, les bordures latérales 74 convergentes de l'emplacement 7 assurent un guidage optimal vers la bordure transversale 73 de l'emplacement avant 7.

Cette translation est poursuivie jusqu'à ce que la surface d'appui 131a, 181a de la partie assemblage 13, 18 vienne épouser la bordure transversale 73 de l'emplacement avant 7 associé.

Lors de cette manoeuvre, la nervure 131b, 181b de la partie assemblage 13, 18 de l'organe amovible 3, 4 vient se loger dans la rainure 74 de la bordure transversale 73 de l'emplacement avant 7.
Simultanément, leur languette 132a, 182a vient se loger dans la saignée 75 associée, et leur réservation 132b, 182b vient recouvrir par emboîtement élastique leur ergot 76 respectif (visibles sur les figures 3 et 4).

Ce simple mouvement en translation permet ainsi d'obtenir un verrouillage optimal de chaque organe de suspension 3, 4 dans son emplacement avant 7, combinant une coopération nervure/rainure et un emboîtement élastique de type clipsage (en particulier pour éviter un mouvement impromptu d'extraction de l'organe de suspension 3, 4).
La coopération languette 132a, 182a/saignée 75 assure quant à elle en particulier un verrouillage optimal en rotation de l'organe amovible 3, 4 dans son emplacement 7.

Si l'utilisateur le souhaite, un organe de suspension 3, en forme de crochet, peut également être rapporté dans l'emplacement 17 d'un organe porte-bride 4 (tel qu'illustré par les figures 4 et 15).

Plus précisément, l'organe de suspension 3, en forme de crochet, est positionné au sein d'un emplacement 17 de l'organe porte-bride 4 de sorte que sa surface arrière d'appui 136 est mise en contact contre sa surface de fond 171.

Cet organe de suspension 3, en forme de crochet, est ensuite manoeuvré en translation selon une direction qui s'étend parallèlement au plan général de sa platine 15 (parallèle aux faces arrière 151 et avant 152 de la platine 15), et cela dans un sens orienté depuis la bordure supérieure 153 vers la bordure inférieure 154 de la platine 15 (c'est-à-dire encore en direction de la bordure transversale 173 de son emplacement 17).

Cette translation est poursuivie jusqu'à ce que la surface d'appui 131a de la partie assemblage 13 vienne épouser la bordure transversale 173 de l'emplacement 17 associé.

Lors de cette manoeuvre, la nervure 131b de la partie assemblage 13 de l'organe amovible 3 vient se loger dans la rainure 174 de la bordure transversale 173 de l'emplacement avant 17.
Simultanément, leur languette 132a vient se loger dans la saignée 175 associée ; et leur réservation 132b vient recouvrir par emboîtement élastique leur ergot 176 (visibles sur les figures 4 et 15).

Les figures 1 à 4 montrent ainsi une configuration possible du dispositif de suspension 1, avec successivement (de la gauche vers la droite selon les figures 2 et 3) - un organe porte-bride 4 seul, - un organe de suspension en forme de crochet 3 seul, et - un organe porte-bride 4 sur lequel est monté un organe formant crochet 3. Certains emplacements avant 7 sont ici libres.

Dans cette configuration, le dispositif de suspension 1 est ici équipé encore d'organes de fixation 5 qui sont rapportés au sein des deux emplacements arrière 8 de l'embase 2.

Tel qu'évoqué précédemment, ces organes de fixation 5 ont ici une structure identique à celle des organes de suspension 3 et sont orientés avec leur portion concave 10 s'ouvrant vers la bordure inférieure 24 de l'embase 2.

De la même manière que les organes de suspension 3, ces organes de fixation 5 sont rapportés par un mouvement de translation, parallèle au plan général de l'embase support 2.

La seule différence est liée à la manoeuvre en translation de ces organes de fixation 5 qui est réalisée ici depuis la bordure inférieure 24 vers la bordure supérieure 23.

De manière alternative, ce dispositif de suspension 1 peut être fixé directement sur sa structure de réception (sans les organes de fixation 5), au moyen de vis rapportées au travers des orifices 27 de son embase support 2.
La surface arrière 21 de l'embase support 2 vient alors prendre appui directement sur la structure de réception.

Pour démonter les organes amovibles 3, 4 ou 5, il suffit à l'utilisateur d'exercer une force adaptée sur ces organes de suspension 3, 4 ou 5 tout en maintenant fermement l'embase 2 (en particulier pour désactiver les moyens d'emboîtement élastique 132, 182, 76, 86).
Ce démontage peut être réalisé sur une embase support 2 fixée sur une structure de réception.

Ainsi, une force est appliquée sur les organes de suspension 3 ou 4 selon une même direction s'étendant dans le plan général de l'embase 2, mais dans un sens inverse au montage (c'est-à-dire depuis la bordure inférieure 24 vers la bordure supérieure 23 de l'embase 2).
De la même manière, le démontage des organes de fixation 5 va s'effectuer par un mouvement inverse, depuis la bordure supérieure 23 vers la bordure inférieure 24 de l'embase 2.

Selon une variante de réalisation non représentée, l'embase support peut aussi être structurée pour une fixation avec son axe longitudinal orienté verticalement.
Dans ce cas, les emplacements « avant » et/ou « arrière » sont avantageusement répartis verticalement, sur la hauteur de l'embase support (superposés les uns par rapport aux autres). Et ils sont avantageusement orientés de sorte que leurs axes de symétrie respectifs s'étendent également verticalement.

Selon encore une autre variante non représentée, la platine 15 de l'organe de suspension 4 « porte-bride » peut être dépourvue de la partie d'assemblage 18.

La face arrière 151 de la platine 15 constitue ainsi directement la surface d'appui arrière 183 apte à venir prendre appui sur la structure de réception.

Ce dernier organe de suspension 4 « porte-bride » est avantageusement toujours destiné à recevoir un autre organe de suspension 3, en forme de crochet, pour former un dispositif de suspension similaire à celui illustré sur la figure 15.

La présente invention propose donc un organe de suspension particulièrement polyvalent et facilement adaptable à l'objet à suspendre.

L'utilisateur peut aussi utiliser une combinaison de pièces ayant des couleurs différentes pour obtenir un effet esthétique personnalisé et/ou pour le repérage par l'utilisateur (notamment ludique ou fonctionnel).

## Revendications

1. Dispositif pour la suspension d'objets, par exemple d'équipements du cheval ou d'accessoires de pêche comprenant :
a/ un premier organe de suspension (3), en forme de crochet, muni d'une partie d'assemblage (13), et
b/ un second organe de suspension (4) comprenant une platine (15) dont
- une face arrière (151) est destinée à être orientée du côté d'une structure de réception et - une face avant (152) est munie (i) d'une extension (16) pour la suspension d'objets et, (ii) en dessous de ladite extension (16), d'un emplacement (17) pour la réception amovible dudit premier organe de suspension (3), lequel emplacement (17) comporte des moyens pour un emboîtement élastique, de type clipsage ou encliquetage, de ladite partie d'assemblage (13) dudit organe de suspension (3) associé,
**caractérisé en ce qu'**il comprend encore une embase support (2) qui est destinée à être fixée sur une structure de réception et qui comporte au moins un emplacement (7) pour la réception amovible, par emboîtement, d'une partie assemblage (18) dudit second organe de suspension (4) ménagée dans ladite face arrière (151) de sa platine (15), ou de ladite partie d'assemblage (13) dudit premier organe de suspension (3) en forme de crochet.

2. Dispositif selon la revendication 1, **caractérisé en ce que** ladite extension (16) dudit second organe de suspension (4) présente une section et une surface supérieure (161) qui sont de forme courbe convexe, apte à servir en particulier de porte-bride ou de porte-bombe.

3. Dispositif selon l'une quelconque des revendications 1 ou 2, **caractérisé en ce que**, du côté de sa face arrière (151), ladite platine (15) comporte un plan (183) définissant une surface d'appui arrière (183) apte à venir prendre appui sur la structure de réception.

4. Dispositif selon la revendication 3, **caractérisé en ce que** la partie assemblage (18) s'étend dans le plan (183) définissant la surface d'appui arrière (183).

5. Dispositif selon les revendications 1 à 4 , **caractérisé en ce que** la platine (15) est munie de plusieurs orifices traversants (157) qui sont utiles pour le positionnement d'accessoires de fixation, de sorte à permettre une solidarisation directe de cet organe de suspension (4) sur une structure de réception.

6. Dispositif selon la revendication 1, **caractérisé en ce que** son emplacement (17) consiste en un évidement comportant une surface de fond (171) bordée par deux bordures latérales (172) raccordées par une bordure transversale inférieure (173), et **en ce que** ladite bordure transversale inférieure (173) est munie d'une saignée axiale (175) au sein de laquelle est ménagé un ergot (176).

7. Dispositif selon la revendication 1, **caractérisé en ce que** l'embase support (2) comporte encore au moins un organe (5) pour sa fixation sur la structure de réception, lequel organe de fixation (5) consiste également en un organe amovible comportant une partie assemblage (13), et **en ce que** ladite embase support (2) comporte au moins un emplacement (8) pour la réception amovible, par emboîtement, de ladite partie assemblage (13) dudit organe de fixation (5).

8. Dispositif selon l'une quelconque des revendications 1 ou 7, **caractérisé en ce que** l'embase support (2) comporte deux faces opposées : - une face arrière (21), destinée à être orientée du côté de la structure de réception, et - une face avant (22) opposée, **en ce que** ladite face avant (22) comporte au moins un emplacement (7) pour la réception amovible d'un organe de suspension (3, 4), et le cas échéant ladite face arrière (21) comporte au moins un emplacement (8) pour la réception amovible d'un organe de fixation (5).

9. Dispositif selon la revendication 8, **caractérisé en ce que** le ou les emplacements (7) de la face avant (22) et le ou les emplacements (8) de la face arrière (21) de l'embase support (2) ont des structures identiques qui sont orientées en sens inverse l'une par rapport à l'autre entre lesdites faces avant (22) et arrière (21).

10. Dispositif selon l'une quelconque des revendications 7 à 9, **caractérisé en ce que** l'embase support (2) comporte un axe longitudinal (26), et **en ce que** les emplacements (7) pour la réception des organes de suspension (3, 4) sont répartis le long dudit axe longitudinal (26).

11. Dispositif selon l'une quelconque des revendications 7 à 10, **caractérisé en ce que** l'un au moins des organes amovibles (3, 5) présente une forme de crochet avec une face d'appui concave (10), pour constituer l'organe de suspension (3) ou l'organe de fixation (5) en fonction de l'orientation vers le haut ou vers le bas de ladite face d'appui (10) déterminée par son emplacement de réception (7, 8).

## Patentansprüche

1. Vorrichtung zum Aufhängen von Gegenständen, zum Beispiel von Ausrüstungen des Pferdes oder Angelzubehör, mit
a) einem ersten Organ zum Aufhängen (3), in Form eines Hakens, mit einem Teil zum Zusammensetzen (13) und
b) einem zweiten Organ zum Aufhängen (4) mit einer Platine (15), von der - eine Rückseite (151) dazu bestimmt ist, zu einer Aufnahmestruktur hin gerichtet zu sein, und - eine Vorderseite (152) mit (i) einer Erweiterung (16) zum Aufhängen von Gegenständen und, (ii) unterhalb der Erweiterung (16), einem Platz (17) zum abnehmbaren Aufnehmen des ersten Organs zum Aufhängen (3) versehen ist, wobei der Platz (17) Mittel für ein elastisches in Eingriff Bringen, vom Typs des Einklipsens oder des Einklinkens, des Teils zum Zusammensetzen (13) des zugehörigen Organs zum Aufhängen (3) aufweist,
**dadurch gekennzeichnet, daß** sie außerdem einen Unterstützungssockel (2) aufweist, der dazu bestimmt ist, auf einer Aufnahmestruktur befestigt zu werden, und der wenigstens einen Platz (7) zum abnehmbaren Aufnehmen, durch in Eingriff Bringen, eines Teils zum Zusammensetzen (18) des zweiten Organs zum Aufhängen (4), das in der Rückseite (151) von dessen Platine (15) eingerichtet ist, oder des Teils zum Zusammensetzen (13) des ersten Organs zum Aufhängen (3) in Form eines Hakens aufweist.

2. Vorrichtung gemäß Anspruch 1, **dadurch gekennzeichnet, daß** die Erweiterung (16) des zweiten Organs zum Aufhängen (4) einen Querschnitt und eine obere Oberfläche (161) aufweist, die eine konvex gekrümmte Form aufweisen, die geeignet ist, insbesondere als Träger für Zaumzeug oder als Träger für einen Reiterhelm zu dienen.

3. Vorrichtung gemäß einem der Ansprüche 1 oder 2, **dadurch gekennzeichnet, daß** die Platine (15) auf der Seite ihrer Rückseite (151) eine Ebene (183) aufweist, die eine rückwärtige Auflagefläche (183) definiert, die geeignet ist, auf der Aufnahmestruktur in Auflage zu kommen.

4. Vorrichtung gemäß Anspruch 3, **dadurch gekennzeichnet, daß** sich das Teil zum Zusammensetzen (18) in der die rückwärtige Auflagefläche (183) definierenden Ebene (183) erstreckt.

5. Vorrichtung gemäß einem der Ansprüche 1 bis 4, **dadurch gekennzeichnet, daß** die Platine (15) mit mehreren Durchgangslöchern (157) versehen ist, die zur Positionierung von Befestigungszubehör nützlich sind, um eine direkte Befestigung dieses Organs zum Aufhängen (4) auf einer Aufnahmestruktur zu ermöglichen.

6. Vorrichtung gemäß Anspruch 1, **dadurch gekennzeichnet, daß** ihr Platz (17) aus einer Ausnehmung besteht, die eine durch zwei durch einen unteren Querrand (173) verbundene Seitenränder (172) umrandet Bodenoberfläche (171) aufweist, und daß der untere Querrand (173) mit einer axialen Nut (175) versehen ist, in der eine Nase (176) eingerichtet ist.

7. Vorrichtung gemäß Anspruch 1, **dadurch gekennzeichnet, daß** der Unterstützungssockel (2) noch wenigstens ein Organ (5) für seine Befestigung auf der Aufnahmestruktur aufweist, wobei das Befestigungsorgan (5) ebenfalls aus einem abnehmbaren Organ besteht, das ein Teil zum Zusammensetzen (13) aufweist, und daß der Unterstützungssockel (2) wenigstens einen Platz (8) zum abnehmbaren Aufnehmen, durch in Eingriff Bringen, des Teils zum Zusammensetzen (13) des Befestigungsorgans (5) aufweist.

8. Vorrichtung gemäß einem der Ansprüche 1 oder 7, **dadurch gekennzeichnet, daß** der Unterstützungssockel (2) zwei entgegengesetzte Seiten aufweist: - eine Rückseite (21), die dazu bestimmt ist, zur Seite der Aufnahmestruktur hin gerichtet zur sein, und - eine entgegengesetzte Vorderseite (22), daß die Vorderseite (22) wenigstens einen Platz (7) zum abnehmbaren Aufnehmen eines Organs zum Aufhängen(3, 4) aufweist, und daß die Rückseite (21) gegebenenfalls wenigstens einen Platz (8) zum abnehmbaren Aufnehmen eines Befestigungsorgans (5) aufweist.

9. Vorrichtung gemäß Anspruch 8, **dadurch gekennzeichnet, daß** der oder die Plätze (7) der Vorderseite (22) und der oder die Plätze (8) der Rückseite (21) des Unterstützungssockels (2) identische Strukturen aufweisen, die in zueinander entgegengesetzten Richtungen zwischen der Vorderseite (22) und der Rückseite (21) aufgerichtet sind.

10. Vorrichtung gemäß einem der Ansprüche 7 bis 9, **dadurch gekennzeichnet, daß** der Unterstützungssockel (2) eine Längsachse (26) aufweist und daß die Plätze (7) für die Ausnahme der Organe zum Aufhängen (3, 4) entlang der besagten Längsachse (26) verteilt sind.

11. Vorrichtung gemäß einem der Ansprüche 7 bis 10, **dadurch gekennzeichnet, daß** wenigstens eins der abnehmbaren Organe (3, 5) eine Hakenform mit einer konkaven Auflagefläche (10) aufweist, um in Abhängigkeit von der durch ihren Aufnahmeplatz (7, 8) bestimmten Ausrichtung der Auflagefläche (10) nach oben oder nach unten das Organ zum Aufhängen (3) oder das Befestigungsorgan (5) zu bilden.

## Claims

1. A device for hanging objects, for example horse equipment or fishing accessories, comprising:
a) a first hanging member (3), having a hook shape, provided with an assembling portion (13), and
b) a second hanging member (4) comprising a plate (15) of which - a rear face (151) is intended to be oriented to the side of a receiving structure and - a front face (152) is provided with (i) an extension (16) for the hanging of objects and with, (ii) under said extension (16), a location (17) for the removable receipt of said first hanging member (3), which location (17) includes means for an elastic fitting, of the clipsage or latching type, of said assembling portion (13) of said associated hanging member (3),
**characterized in that** it further comprises a support base (2) that is intended to be fixed to a receiving structure and that includes at least one location (7) for the removable receipt, by fitting, of an assembling portion (18) of said second hanging member (4) formed in said rear face (151) of the plate (15) thereof, or of said assembling portion (13) of said hook-shaped first hanging member (3).

2. The device according to claim 1, **characterized in that** said extension (16) of said second hanging member (4) has a section and an upper surface (161) that are of convex curved shape, adapted to serve in particular as a bridle-hanger or a ride cap-hanger.

3. The device according to any one of claims 1 or 2, **characterized in that**, on the side of the rear face (151) thereof, said plate (15) includes a plan (183) defining a rear bearing surface (183) adapted to bear on the receiving structure.

4. The device according to claim 3, **characterized in that** the assembling portion (18) extends in the plan (183) defining the rear bearing surface (183).

5. The device according to claims 1 to 4, **characterized in that** the plate (15) is provided with several through orifices (157) that are useful for the positioning of fixation accessories, so as to allow a direct fastening of this hanging member (4) to a receiving structure.

6. The device according to claim 1, **characterized in that** the location (17) thereof consists in a recess having a bottom surface (171) lined by two lateral edges (172) connected by a lower transverse edge (173), and **in that** said lower transverse edge (173) is provided with an axial groove (175) within which is provided a snug (176).

7. The device according to claim 1, **characterized in that** the support base (2) further includes at least one member (5) for the fixation thereof to the receiving structure, which fixation member (5) further consists in a removable member including an assembling portion (13), and **in that** said support base (2) includes at least one location (8) for the removable receipt, by fitting, of said assembling portion (13) of said fixation member (5).

8. The device according to any one of claims 1 or 7, **characterized in that** the support base (2) includes two opposite faces : - a rear face (21), intended to be oriented to the side of the receiving structure, and - an opposite front face (22), **in that** said front face (22) includes at least one location (7) for the removable receipt of a hanging member (3, 4), and, as the case may be, said rear face (21) includes at least one location (8) for the removable receipt of a fixation member (5).

9. The device according to claim 8, **characterized in that** the location(s) (7) of the front face (22) and the location(s) (8) of the rear face (21) of the support base (2) have identical structures that are oriented in the reverse direction with respect to each other between said front (22) and rear (21) faces.

10. The device according to any one of claims 7 to 9, **characterized in that** the support base (2) includes a longitudinal axis (26), and **in that** the locations (7) for the receipt of the hanging members (3, 4) are distributed along said longitudinal axis (26).

11. The device according to any one of claims 7 to 10, **characterized in that** at least one of the removable members (3, 5) has a hook shape with a concave bearing face (10), in order to form the hanging member (3) or the fixation member (5) as a function of the upward or downward orientation of said bearing face (10) determined by the receiving location (7, 8) thereof.
